# EUROPEAN PATENT SPECIFICATION

(11) **EP 1 772 359 B1**
(45) Date of publication and mention of the grant of the patent: **11.03.2009**
(21) Application number: 06019888.4
(22) Date of filing: 22.09.2006
(51) Int. Cl.: B62J 1/28, B62J 99/00, B62J 1/12, B62K 19/46

(54) **Motorcycle**
Motorrad
Motocyclette

(30) Priority: 05.10.2005 JP 2005292039
(43) Date of publication of application: 11.04.2007
(73) Proprietor: HONDA MOTOR CO., LTD., Tokyo 107-8556 (JP)
(72) Inventor: Miyakawa, Futoshi, Wako-shi Saitama 351-0193 (JP); Tako, Kenji, Wako-shi Saitama 351-0193 (JP); Yamaguchi, Hiromasa, Wako-shi Saitama 351-0193 (JP); Sato, Yasuhiro, Wako-shi Saitama 351-0193 (JP)
(74) Representative: Rupp, Christian

(56) References cited:
- EP-A2- 0 953 500
- JP-A- 4 092 792
- JP-A- 9 323 690
- JP-A- 62 080 179
- JP-A- 62 080 180

## Description

The present invention relates to a motorcycle including: a rider seat, on which a rider sits, in a rear portion of a vehicle body frame; a seat cowl which covers a portion beneath the rider seat; and grab rails on which a rider holds.

There has heretofore been known a motorcycle including: a housing part provided in a rear portion of a vehicle body frame for housing articles; a rider seat which covers the housing part in a way that the rider seat can be opened and closed; a seat cowl which covers a portion beneath the rider seat; and grab rails provided in the rear portion of the vehicle body frame on which a rider holds (see, for example, Patent Document 1).
Japanese Patent No. 2724748 (Fig. 4)

Fig. 4 in Patent Document 1 shows a structure of a rear portion of a motorcycle, in which a rear seat 29 is disposed behind a seat 17, a seat cowl is disposed under the rear seat 29, and grab rails 43 are disposed on both sides of the seat cowl.

The grab rails 43 laterally protrude from the rear seat 29. Thus, when a rider gets on and off the motorcycle, the rider' s feet and the like need to be moved around the protruding grab rails 43. Accordingly, more improvement may be made for ease of getting on and off the motorcycle.

Moreover, compared with a motorcycle including no grab rails, since the grab rails 43 laterally protrude from the rear seat 29, there is still room for improvement in appearance. It is more preferable that the appearance be equivalent to that of the motorcycle including no grab rails.

Patent document JP 62-080180 A relates to a fitting structure of a side-section grip for a motorcycle. Said motorcycle comprises a hingeable seat structure. The side-section grip is disposed beneath said seat structure on the left and right hand side of the seat. A flank cover has a flank covering upper limb being prolonged inside behind the grip so that the grip can be easily grasped by a co-driver from the outside. Said grip is covered to the outside by an extra covering. Said covering is fixed to the lower surface of the seat by means of a screw and extending downward from said seat such that the covering covers the grip to the outside. Document JP 62-080 180 discloses a motorcycle according to the preamble of claim 1.

Patent document JP 09-323690 A relates to a body structure in a scooter type vehicle having longitudinal framing sections of a sub frame also function as a side grip. The opening for grasping those longitudinal frame sections is formed in both sides of a rear cover, respectively.

Patent document JP 04-092792 A shows a standing handle fitting construction for a motorcycle. The circular grasping parts of the standing handles are positioned at opening parts formed on the side panels or the side covers.

Patent document EP 0 953 500 A2 shows a grab handle arrangement for a scooter type vehicle. Said vehicle having a side cover comprising an opening formed in the side cover through which a handle is accessible.

It is an object of the present invention to provide a motorcycle in which improvement can be made in ease of getting on and off the motorcycle and in appearance of a vehicle.

The invention is a motorcycle as set out in claim 1.

In the invention according to claim 2, a tail lamp provided in the rear portion of the vehicle body frame is disposed in the back part of the spaces.

In the invention according to claim 3, the rider seat is formed of two divided parts which are a driver seat and a passenger seat, and the passenger seat is formed so as to be opened and closed independently of the driver seat.

In the invention according to claim 4, an opening and closing switch for opening and closing the rider seat is provided in a rear end of the seat cowl.

In the invention according to claim 1, the grab rails are housed in the seat cowl, and the rider holds the grab rails by inserting his/her fingers under the seat cowl. Specifically, the grab rails are not in view from outside, and appearance is improved. Moreover, since the grab rails do not protrude from the seat cowl, the rider can get on and off the rider seat easily.

Moreover, the grab rails are disposed respectively in the spaces provided between the upper and lower seat cowls. Thus, the grab rails can be made more inconspicuous. Since the grab rails are made more inconspicuous, the appearance can be further improved.

Moreover, it is not necessary to provide openings for holding the respective grab rails in the seat cowl. Accordingly, the seat cowl can be set to have a simple structure. Since the seat cowl has a simple structure, manufacturing costs for the seat cowl can be reduced.

In the invention according to claim 2, the tail lamp provided in the rear portion of the vehicle body frame is disposed behind the space. Hence, a shape of the seat cowl is not complicated due to arrangement of the tail lamp. Since the shape of the seat cowl is not complicated, manufacturing costs for the cowl can be reduced.

In the invention according to claim 3, the rider seat is formed in a way that the passenger seat can be opened and closed independently of the driver seat. Accordingly, an opening and closing portion of the rider seat can be reduced in weight. Since the opening and closing portion of the passenger seat is reduced in weight, the passenger seat can be opened and closed easily.

In the invention according to claim 4, the opening and closing switch for opening and closing the rider seat is provided in the rear end of the seat cowl. Hence, the rider seat can be opened and closed from either side of the vehicle. Since the rider seat can be opened and closed from either side of the vehicle, operability in the case of opening and closing the rider seat can be enhanced.
FIG. 1 is a cross-sectional view of the left side of a motorcycle according to the present invention.
FIG. 2 is a left side view showing arrangement of components around an engine in the motorcycle according to the present invention.
FIG. 3 is an enlarged view of a part 3 in FIG. 2.
FIG. 4 illustrates a view seen from a direction of an arrow 4 in FIG. 3.
FIG. 5 is a perspective view showing a gearshift operation section in the motorcycle according to the present invention.
FIG. 6 is a perspective view for explaining step parts provided so as to protrude on a step floor in the motorcycle according to the present invention.
FIG. 7 is an external view of the motorcycle according to the present invention.
FIG. 8 is a cross-sectional view of a main part in a rear portion of the motorcycle according to the present invention.
FIG. 9 is a perspective view for explaining an attachment structure of a grab rail according to the present invention.
FIG. 10 is a side view of the rear portion of the motorcycle according to the present invention.
FIG. 11 is a view showing an action of the portion shown in FIG. 10.
FIG. 12 is a perspective view of the rear end of the motorcycle according to the present invention (note that a passenger seat is opened).
FIG. 13 is an external view of the motorcycle according to the present invention when viewed from the rear thereof.
FIG. 14 is a side view of a drive shaft cover of the motorcycle according to the present invention.
FIG. 15 is a perspective view of the drive shaft cover of the motorcycle according to the present invention.
FIG. 16 is a view for explaining around a steering handle of the motorcycle according to the present invention.
FIG. 17 is a side view for explaining a chipping guard of the motorcycle according to the present invention.
FIG. 18 is a view for explaining the chipping guard of the motorcycle according to the present invention.
FIG. 19 is a view for explaining arrangement of components around an axle of a front wheel of the motorcycle according to the present invention.

With reference to the accompanying drawings, a preferred embodiment of the present invention will be described below. Note that "front", "rear", "left", "right", "top" and "bottom" respectively indicate directions viewed from a driver. Moreover, the drawings are viewed in directions of reference numerals.

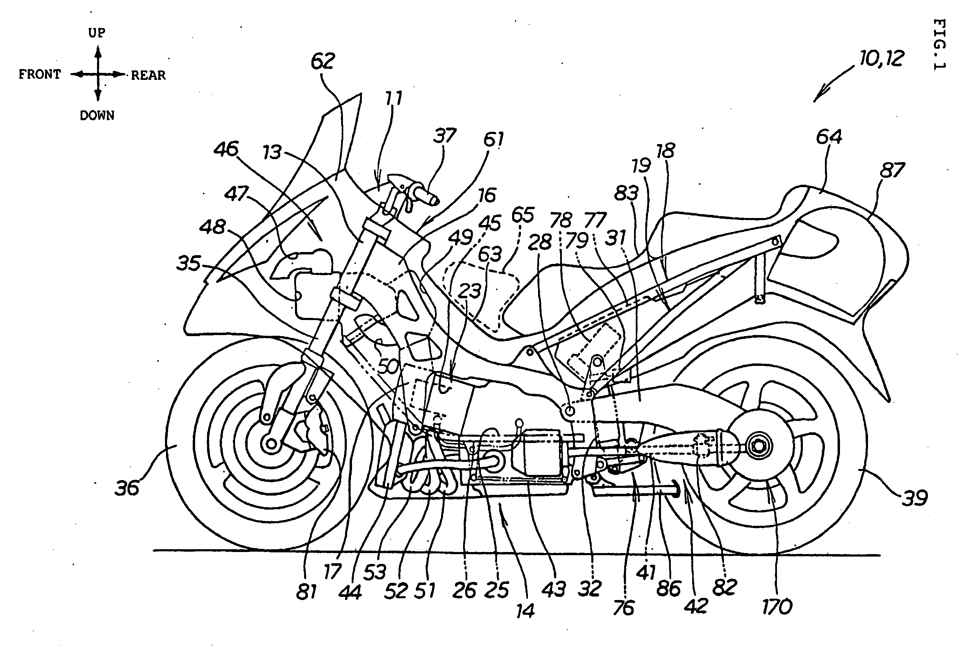

FIG. 1 is a cross-sectional view of the left side of a low-floor motorcycle according to the present invention. A motorcycle 10 is a vehicle 12, which includes a vehicle body frame 11, and which is configured of: a head tube 13 provided to a front end portion of the vehicle 12; upper members 16 and 16 (only reference numeral 16 on the near side is shown) which are provided above an engine 14, and which are extended backward from the head tube 13; seat rails 18 and 18 (only reference numeral 18 on the near side is shown) which are extended obliquely upward to the back from the upper members 16 and 16; support frames 19 and 19 (only reference numeral 19 on the near side is shown) which support the seat rails 18 and 18 from below; down members 17 and 17 (only reference numeral 17 on the near side is shown) which are branched off from the upper members 16 and 16, which are provided on the side of a cylinder block 23 of the engine 14, and which are extended downward; and floor brackets 26 and 26 (only reference numeral 26 on the near side is shown) which are similarly extended backward from upper portions respectively of the upper members 16 and 16, and on which step floors 25 and 25 (only reference numeral 25 on the near side is shown) are mounted.

Moreover, a pivot shaft 28 is attached to the upper members 16 and 16, and a rear swing arm 31 is attached so as to swing up and down around the pivot shaft 28. Furthermore, a rear cushion unit 32 is attached between the rear swing arm 31 and the vehicle body frame 11.

In addition, the motorcycle 10 is a vehicle in which: a front fork 35 is steerably attached to the head tube 13; a front wheel 36 is rotatably attached to a lower end of the front fork 35; a steering handle 37 is attached to a top of the front fork 35; the engine 14 is disposed in a space between the upper member 16 and the down member 17; a rear wheel 39 is rotatably attached to a rear end of the rear swing arm 31; and a power transmission mechanism 42 including a drive shaft 41 interposed between the engine 14 and the rear wheel 39 for driving the rear wheel 39.

Specifically, the motorcycle 10 includes: the vehicle body frame 11; the rear swing arm 31 swingably attached to the vehicle body frame 11 by use of the pivot shaft 28; the engine 14 fixed to the vehicle body frame 11; and the power transmission mechanism 42 which transmits driving force to the rear wheel 39 by way of the drive shaft 41 from the engine 14.

The rear swing arm 31 is a curved frame which is convex upward.
Since the rear swing arm 31 is curved, appearance of the rear swing arm 31 can be enhanced.

The pivot shaft 28 is disposed above the drive shaft 41, and the rear swing arm 31, which is convex upward, is extended backward from the pivot shaft 28. Moreover, a lower end of the rear cushion unit 32 is attached to the rear swing arm 31 by use of a link mechanism 76, and an upper end of the rear cushion unit 32 is fixed at the side of the rear swing arm 31.

Specifically, the power transmission mechanism 42 is provided at the rear end of the rear swing arm 31, and transmits the driving force of the drive shaft 41 to the rear wheel 39 after converting a direction of the driving force. Note that the drive shaft 41 is disposed below the rear swing arm 31 and the pivot shaft 28.

A main body of the engine 14 includes a crankcase 43 and the cylinder block 23 attached to the crankcase 43 while being tilted forward. The engine 14 is a water-cooled inline 3-cylinder engine, and includes a radiator part 44 below the cylinder block 23 and behind the front wheel 36.
The cylinder block 23 includes a cylinder part 45 having a cylindrical inner surface. The cylinder part 45 has 3 cylinders.

Descriptions will be provided for an air cleaner unit 46 which forms a part of an inlet system.
The air cleaner unit 46 includes: an air intake duct 47 provided in front of the head tube 13; a first chamber 48 provided below the air intake duct 47; and a second chamber 49 provided behind the first chamber 48 by use of a connection duct 50. First, air taken in by the air intake duct 47 is cleaned by an unillustrated element included in the first chamber 48. Next, the air is transferred to the second chamber 49 through the connection duct 50. Finally, the cleaned air is supplied to the engine 14 from the second chamber 49.

As described above, by disposing the air cleaner unit 46 in front, and in the back, of the head tube 13, a sufficient volume can be secured, and the unit can be disposed in the vicinity of the engine 14.

An exhaust system will be described. In the exhaust system, a first exhaust pipe 51, a second exhaust pipe 52 and a third exhaust pipe 53 are each connected to the cylinder block 23 included in the inline 3-cylinder engine 14. In addition, the first to third exhaust pipes 51 to 53 are extended backward, and are collected in an unillustrated collection part provided behind the exhaust pipes 51 to 53. Furthermore, a muffler is provided behind the collection part.

A cover member 61 is a member covering a part of the vehicle 12, and also serves as a cowl member. The cover member 61 includes: a main body part cover member 62, which covers the vehicle body frame 11 from a front portion to a rear portion thereof, vehicle body frame 11 including the head tube 13 and the like; a foot passing part cover member 63 provided in the main body part cover member 62 and below a foot passing space 65, through which the driver's foot passes when the driver gets on and off the vehicle; and a rear part cover member 64 which is provided in a rear part of the main body part cover member 62, and which covers a lower part of a rider seat 83.

In this event, the foot passing space 65 is provided above the foot passing part cover member 63. The rider's foot passes through the foot passing space 65 when the rider gets on and off the vehicle. Moreover, the engine 14 is disposed below the foot passing space 65. That is, the engine 14 is disposed below the foot passing space 65 through which the rider's foot passes when the rider gets on and off the vehicle.

Since the engine 14 includes the cylinder part 45 tilted forward, the engine 14 can be disposed in a low position. Since the engine 14 can be disposed in the low position, the foot passing part cover member 63, which is one of the cover member 61, can be disposed in a low position. Hence, a wide space can be secured for the foot passing space 65 positioned above the foot passing part cover member 63.
In this embodiment, the exhaust pipes 51 to 53 are collectively extended to the right side of the engine 14. Meanwhile, the exhaust pipes 51 to 53 may be collectively extended to the left side of the engine 14.

The step floors 25 and 25 (only reference numeral 25 on the near side is shown) are members attached to the floor brackets 26 and 26 which are parts of the vehicle body frame 11. The step floors 25 and 25 are footrest parts on which the rider (or the driver) puts his/her feet when driving.

Reference numeral 76 denotes the link mechanism interposed between the rear cushion unit 32 and the rear swing arm 31, 77: a fuel tank; 78: a fuel pump; 79: a reservoir tank of the rear cushion unit 32; 81: a front brake unit; 82: a universal joint; 83: the rider seat; 86: a main stand; and 87: a helmet housed in a housing part.

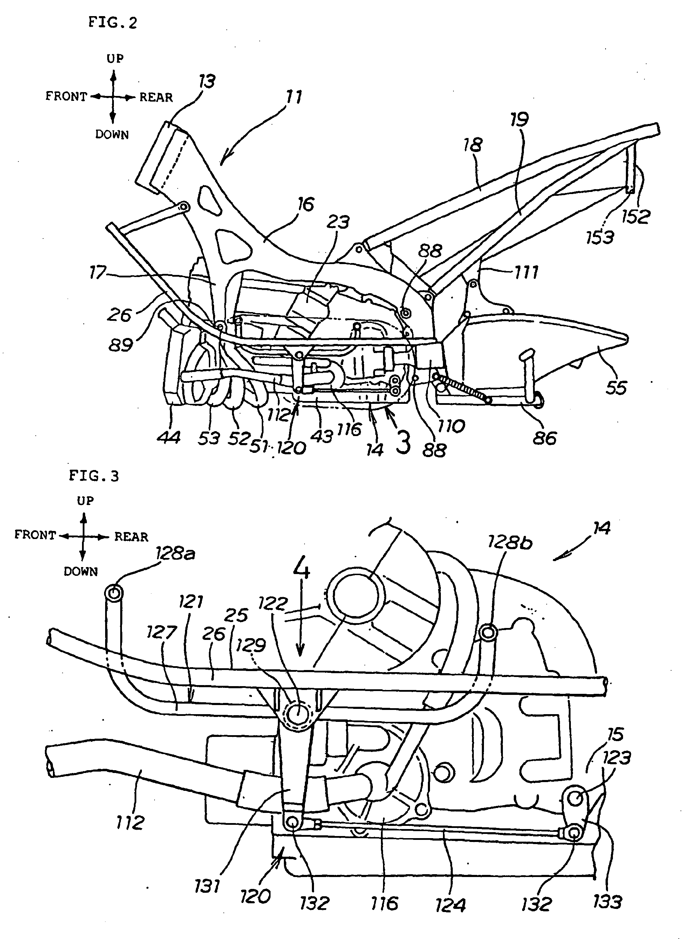

FIG. 2 is a left side view for explaining arrangement of components around the engine in the low-floor motorcycle according to the present invention. The vehicle body frame 11 includes: the upper member 16 extended above the engine 14 from the head tube 13; and the down member 17 extended to the side of the cylinder block 23 of the engine 14 from the head tube 13. The engine 14 is supported by supporting parts 88 and 88 included in the upper member 16 and a supporting part 89 included in the down member 17.

A gearshift operation section 120 for shifting gears is provided on the side of the engine 14. The gearshift operation section 120 will be described in detail with reference to FIG. 3.
Moreover, a cooling water pump 116 is provided on a side of the crankcase 43 of the engine 14. A cooling water pipe 112 is extended forward from the cooling water pump 116, and is connected to the radiator part 44.

The exhaust pipes 51 to 53 are bundled on the right side of the engine 14 and below the step floor 25, and a muffler 55 is disposed behind the bundled exhaust pipes. The muffler 55 is integrated with the vehicle body frame 11 by being attached to a stay member 111 which is hung from the support frame 19.

FIG. 3 is an enlarged view of a part 3 in FIG. 2. The gearshift operation section 120 mainly includes a gearshift pedal 121 and a connection rod 124 for shifting movement of the gearshift pedal 121, the connection rod 124 being interposed between a shaft member 122 and a shift shaft 123. The shaft member 122 rotatably supports the gearshift pedal 121, and the shift shaft 123 is extended from a transmission 15 provided integrally with the engine 14.

The gearshift pedal 121 includes: an arm part 127; step parts 128a and 128b respectively provided at front and rear ends of the arm part 127; a support part 129 which is provided approximately in the middle of a longitudinal direction of the arm part 127, and which is swingably supported around the shaft member 122; and a lever part 131 extended downward below the support part 129.

The gearshift pedal 121 is disposed by aligning the longitudinal direction of the arm part 127 with a cross direction of the vehicle. In addition, the gearshift pedal 121 is disposed so as to cause the step parts 128a and 128b to protrude above the step floor 25 by a height corresponding to at least a length of an operation stroke. Thus, most parts respectively of the support part 129 and the arm part 127 are positioned below an upper surface of the step floor 25.
Reference numerals 132 and 132 denote link shafts provided at both ends of the connection rod 124, and reference numeral 133 denotes a small lever part.

Specifically, the gearshift pedal 121 includes the lever part 131 extended downward, and the lever part 131 and the shift shaft 123, which is laterally extended from the transmission 15, are connected with the connection rod 124. Since the gearshift pedal 121 is swingably attached to one of the floor brackets 26 and 26 which respectively support the step floors 25 and 25, a stay for attaching the gearshift pedal 121 is not needed. Since it is not necessary to additionally provide a stay, the number of components can be reduced.

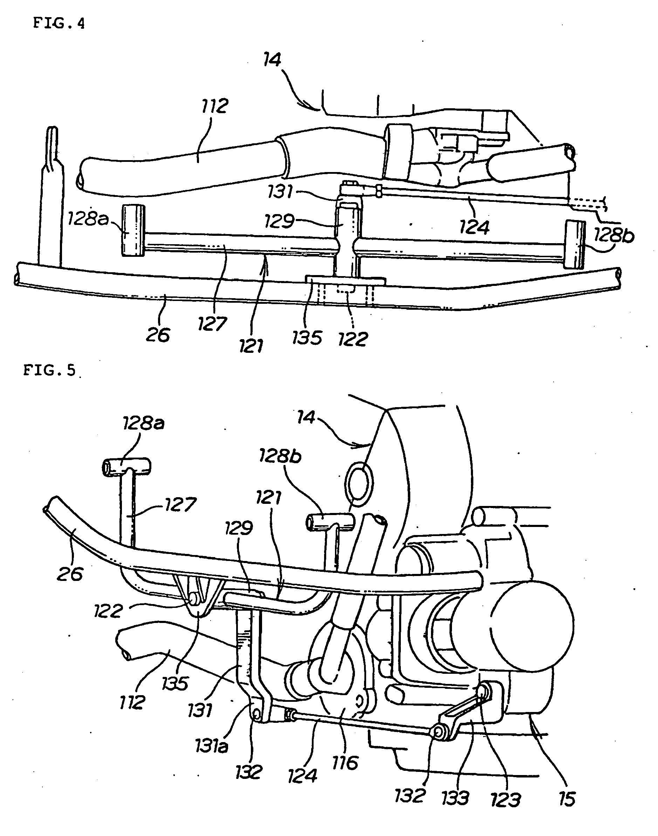

FIG. 4 illustrates a view seen from a direction of an arrow 4 in FIG. 3. The following structure is adopted. Specifically, a plate member 135 to be a stay is attached from inside to the floor bracket 26 supporting the step floor. Moreover, the gearshift pedal 121 is attached to the plate member 135 so as to swing by use of the shaft member 122.
Note that the lever part 131 is disposed close to the engine 14 disposed inside the vehicle body frame (reference numeral 11 in FIG. 1).

When the lever part 131 is disposed close to the engine 14 disposed inside the vehicle body frame 11, a wide bank angle of the vehicle can be secured compared with the case where the lever part 131 is disposed outside in the width direction of the vehicle.

FIG. 5 is a perspective view for explaining the gearshift operation section of the motorcycle according to the present invention. The gearshift pedal 121 includes the lever part 131 extended downward. The lever part 131 and the shift shaft 123, which is extended from the transmission 15 provided integrally with the engine 14, are connected with the connection rod 124.
It is preferable that a tip 131a of the lever part 131 be bent toward the engine 14. As a result, a much wider bank angle of the vehicle can be secured.

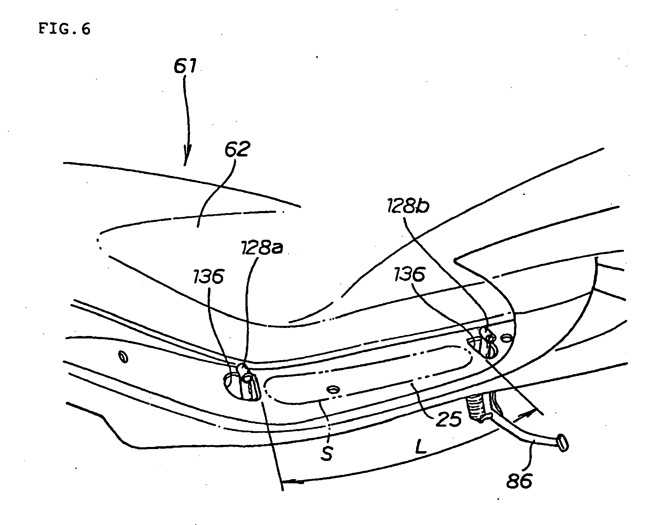

FIG. 6 is a perspective view for explaining the step parts caused to be protruded above one of the step floors of the motorcycle according to the present invention. Front and rear through-holes 136 and 136 respectively for passing the step parts 128a and 128b are provided in one of the step floors 25 and 25. Through the through-holes 136 and 136, the step parts 128a and 128b, which are parts of the gearshift pedal 121, are provided so as to protrude upward.

The two step parts 128a and 128b are respectively for shifting down and up. It is preferable that the step parts 128a and 128b be separated from each other by a length (L) larger than that of a rider' s shoe so that the rider' s foot can be placed on the step floor 25 between the step parts 128 a and 128b.

The step part 128 is formed of the two step parts 128a and 128b respectively for shifting down and up, and the step parts 128a and 128b are separated from each other so that the rider's foot can be placed on the step floor 25 therebetween.
Thus, a space between the two step parts 128a and 128b can be utilized as a footrest space S on which the rider's foot is placed. Since the space between the two step parts 128a and 128b serves as an effective footrest space, a dead space on the upper surface of the step floor 25 can be minimized while an area of the step floor 25 can be effectively utilized.

Moreover, since the two step parts 128a and 128b are sufficiently separated from each other, only one of gearshift operations can be assured by operating either one of the step parts.
Specifically, in a state where the rider's foot is placed on the footrest space S, the rider may enjoy driving at a constant speed and the like, and may step on one of the step parts 128a and 128b, which protrude from the step floor 25, only when changing the speed. The position of the rider's foot can be moved freely within a range of the footrest space S. Hence, according to the present invention, a degree of freedom for a riding position can be enhanced.

Incidentally, although a mechanical method using a gearshift pedal is adopted as a gear shifting method in this embodiment, the method is not limited thereto. For example, the following configuration may be adopted. Specifically, switch means such as a proximity switch and an optical sensor are disposed in positions corresponding to the step parts 128a and 128b of the gearshift pedal on the side of the main body part cover member 62. Accordingly, the gear is shifted up or down by detection signals from the switch means.

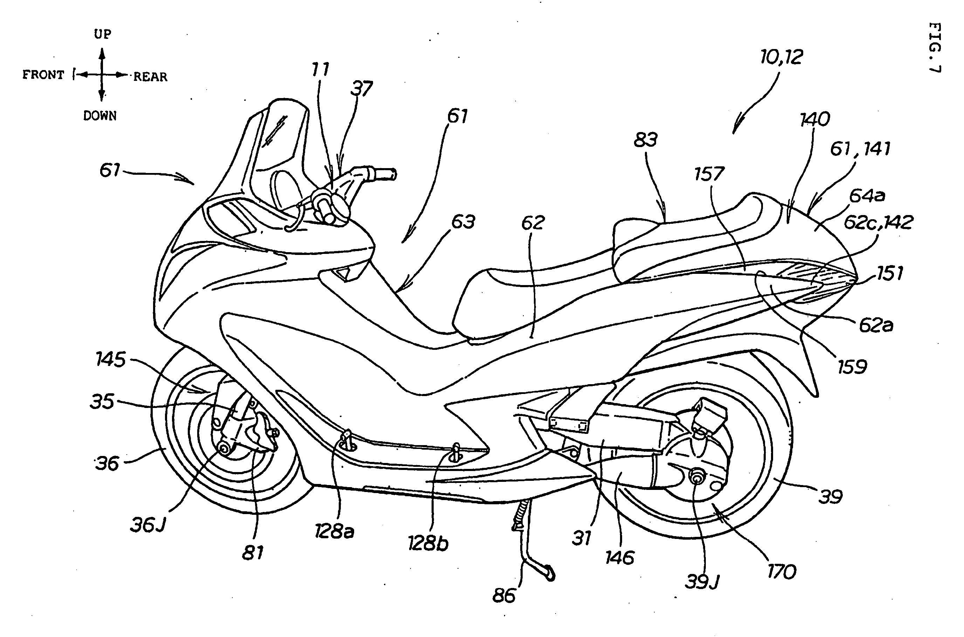

FIG. 7 is an external view of the motorcycle according to the present invention. The cover member 61 is attached to the vehicle body frame (reference numeral 11 in FIG. 1) and includes: the main body part cover member 62 which covers the vehicle body frame from the front portion to the back portion thereof; the foot passing part cover member 63 provided in the main body part cover member 62 and below the foot passing space (reference numeral 65 in FIG. 1), through which the driver's foot passes when the driver gets on and off the vehicle; and the rear part cover member 64 which is provided in an upper rear part of the main body part cover member 62, and covers the lower part of the rider seat 83.

A surface 64a of the rear part cover member 64 and a surface 62a, which is included in a rear part 62c of the main body part cover member 62, are formed so as to be smoothly continuous when viewed from the side. When the rider seat 83 is closed, a sense of unity can be realized between the rear part cover member 64 and the rear part 62c of the main body part cover member 62. Hence, the two members together can be seen as a seat cowl 140 of the vehicle as a whole.

Thus, the rear part cover member 64 can be regarded as an upper seat cowl 141, and the rear part 62c of the main body part cover member 62 can be regarded as a lower seat cowl 142.
Incidentally, reference numeral 145 denotes a chipping guard which covers a sliding part of the front fork 35, reference numeral 146 denotes a drive shaft cover which covers the drive shaft (reference numeral 41 in FIG. 1), and reference numeral 151 denotes a tail lamp.

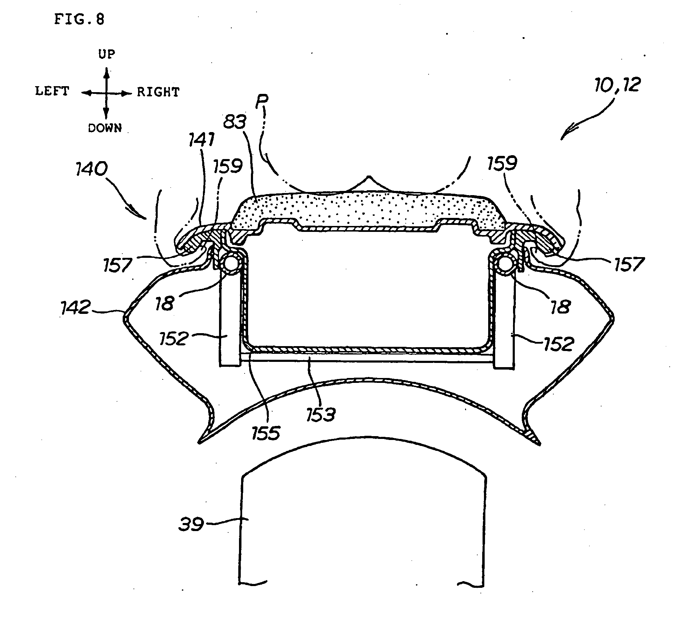

FIG. 8 is a cross-sectional view of a main part in the rear portion of the motorcycle according to the present invention. Sub-rails 152 and 152 are extended downward respectively from the seat rails 18 and 18 which are parts respectively of the left and right vehicle body frame 11. Lower ends of the sub-rails 152 and 152 are connected to each other with a crossrail 153, and a housing part 155 is disposed in a portion surrounded by the rails 152, 152 and 153. Grab rails 157 and 157 are disposed outside the seat rails 18 and 18, the rider seat 83 is disposed above the housing part 155, and the upper seat cowl 141 is disposed on the upper surfaces of the grab rails 157 and 157. Note that the rider seat 83 and the upper seat cowl 141 are integrated with each other. Accordingly, the rider seat 83 and the upper seat cowl 141 are moved together along with opening and closing of the rider seat 83.

Specifically, when the housing part 155 is closed with the rider seat 83, the grab rails 157 and 157 are covered with the seat cowl 140. The seat cowl 140 is formed of the upper and lower seat cowls 141 and 142. When the housing part 155 is closed with the rider seat 83, spaces 159 and 159 are provided respectively between the upper and lower seat cowls 141 and 142. In the spaces 159 and 159, the grab rails 157 and 157 are respectively disposed.

The grab rails 157 and 157 are disposed respectively in the spaces 159 and 159 provided between the upper and lower seat cowls 141 and 142. Thus, the grab rails 157 and 157 can be made more inconspicuous. Since the grab rails 157 and 157 are made more inconspicuous, appearance of the vehicle 12 can be further enhanced.

In addition, it is not necessary to provide openings for holding the grab rails 157 and 157 in the upper seat cowl 141. Accordingly, the upper seat cowl 141 can be set to have a simple structure. Since the structure of the upper seat cowl 141 is simple, it is made possible to reduce manufacturing costs for the seat cowl 140 including the upper seat cowl 141 (or a corresponding portion).

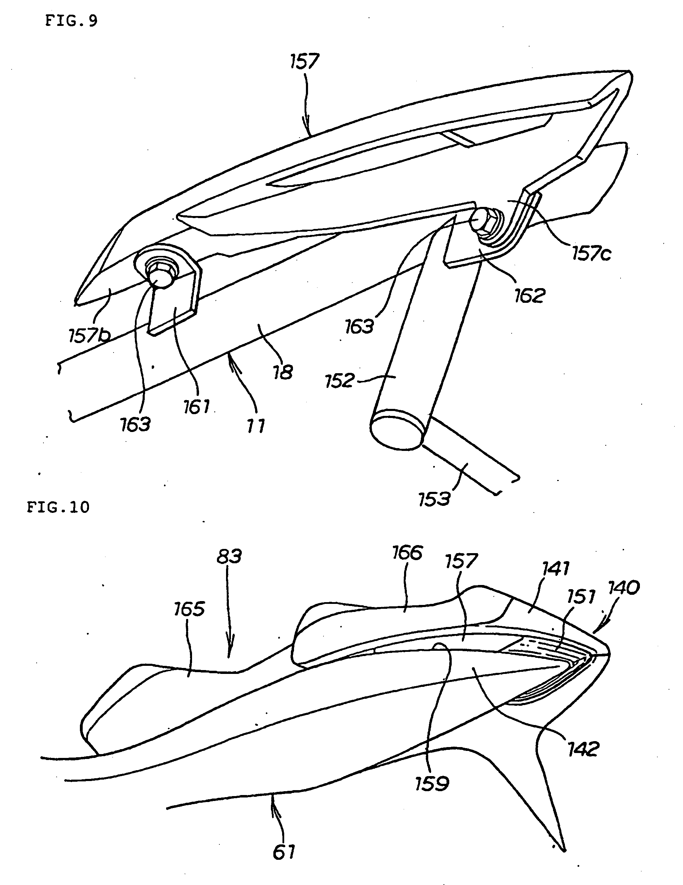

FIG. 9 is a perspective view for explaining an attachment structure of the grab rails according to the present invention. In the structure, brackets 161 and 162 are extended from the seat rail 18. A bottom part 157b and a side part 157c of the grab rail 157 are caused to be in contact with the brackets 161 and 162. The grab rail 157 is attached to the brackets 161 and 162 by use of bolts 163 and 163. As a result, the grab rails 157 and 157 can be firmly fixed to the side of the vehicle body frame 11.

FIG. 10 is a side view of the rear part of the motorcycle according to the present invention. The rider seat 83 is formed of two divided parts, which are a driver seat 165 and a passenger seat 166. The passenger seat 166 is characterized by being formed so as to be opened and closed independently of the driver seat 165.
Moreover, the tail lamp 151 provided in the rear part of the vehicle body frame 11 is disposed in the back portion of the space 159 provided between the upper and lower seat cowls 141 and 142.

Generally, a concave part is provided in a rear cowl, and a tail lamp is housed in the concave part. For this reason, the rear cowl has a complicated shape, and is expensive.
Meanwhile, in the present invention, the tail lamp 151 is disposed in the space 159. Thus, it is not necessary to provide a concave part in the seat cowl 140. Even when the concave part is provided, the concave part can be shallow. As a result, a shape of the seat cowl 140 is simplified, and manufacturing costs for the cover member 61 including the seat cowl 140 can be reduced.

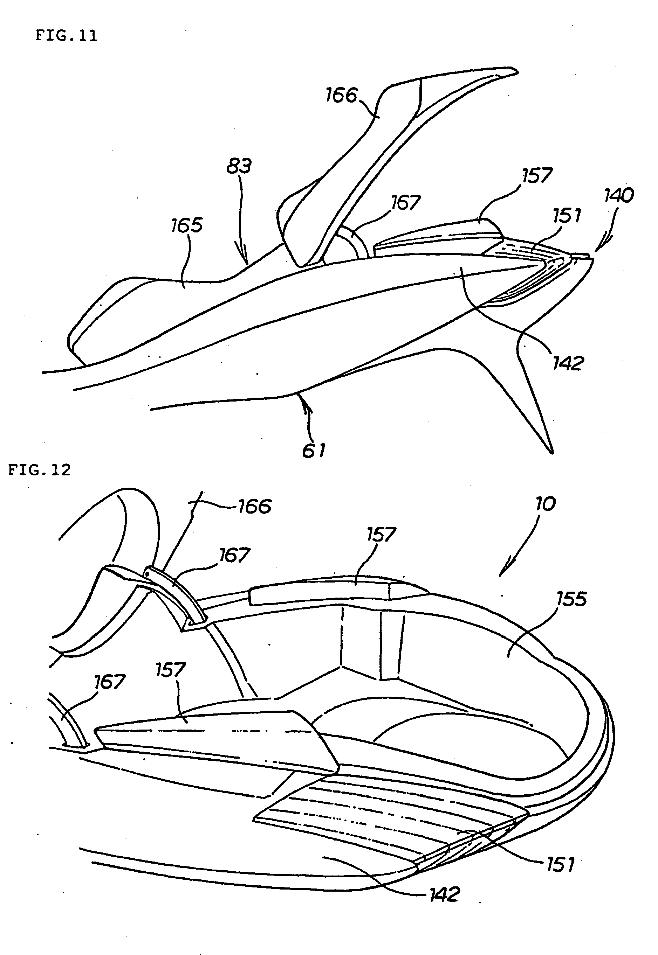

FIG. 11 is a view showing an action of the portion shown in FIG. 10. The passenger seat 166 is formed independently of the driver seat 165, and is opened and closed with a hinge part 167.
Assuming that the rider seat 83 is formed to be an integral tandem seat in which the driver seat 165 and the passenger seat 166 are continuous, the rider seat 83 is increased in size and weight.

Meanwhile, in the present invention, the rider seat 83, in which the driver seat 165 and the passenger seat 166 are separated from each other, is adopted.
Since the passenger seat 166 is consequently reduced in size and weight, opening and closing thereof is very easy.

FIG. 12 is a perspective view of the rear portion of the motorcycle according to the present invention (note that the passenger seat is opened). The rear portion of the motorcycle 10 includes: the housing part 155 provided in the rear part of the vehicle body frame 11 for housing articles; the passenger seat 166 which covers the housing part 155 so that the housing part 155 can be opened and closed; the lower seat cowl 142 which forms a part of the seat cowl covering the part below the passenger seat 166; and the grab rails 157 and 157 provided in the rear part of the vehicle body frame 11 for the rider holds.
Incidentally, in this embodiment, two helmets can be housed in the housing part 155.

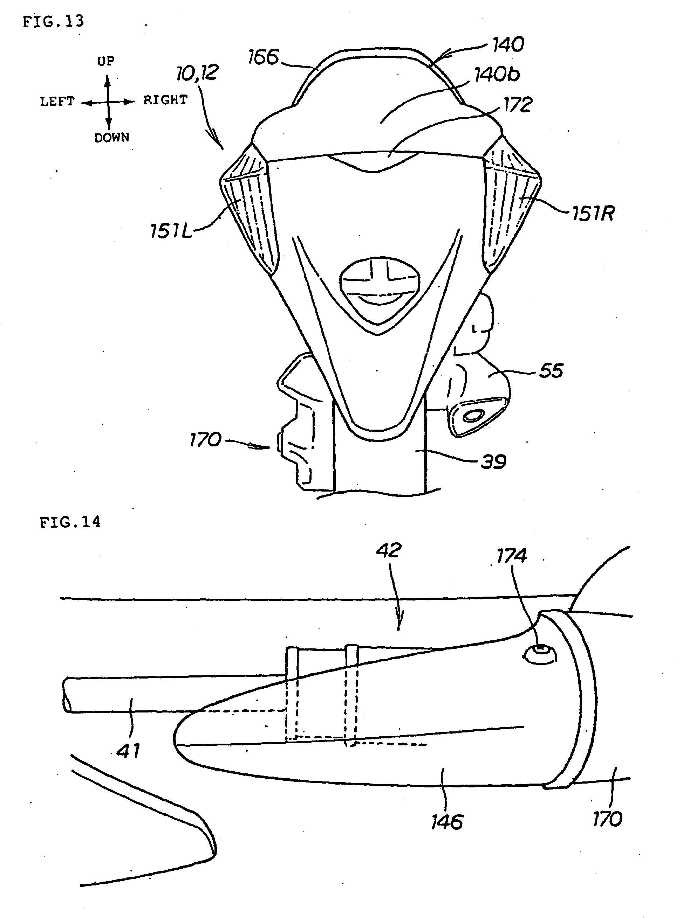

FIG. 13 is an external view of the motorcycle according to the present invention when viewed from the rear thereof. An opening and closing switch 172 for opening and closing the passenger seat 166 is provided in a rear end 140b of the seat cowl 140. Since the opening and closing switch 172 for opening and closing the passenger seat 166 is provided in the rear end 140b of the seat cowl, the passenger seat 166 can be opened and closed from either side of the vehicle 12. Since the passenger seat 166 can be opened and closed from either side of the vehicle 12, operability in a case of opening and closing the passenger seat 166 can be enhanced.

The attachment structure of the grab rails and the structure of the gearshift pedal have been described above. Next, the drive shaft cover, a structure around the steering handle and the chipping guard, all of which are included in the motorcycle of the present invention, will be sequentially described.

FIG. 14 is a side view of the drive shaft cover of the motorcycle according to the present invention. By use of a fastening member 174, a half-cylindrical cover 146 is attached to a drive case 170 which is a constituent component of the power transmission mechanism 42.

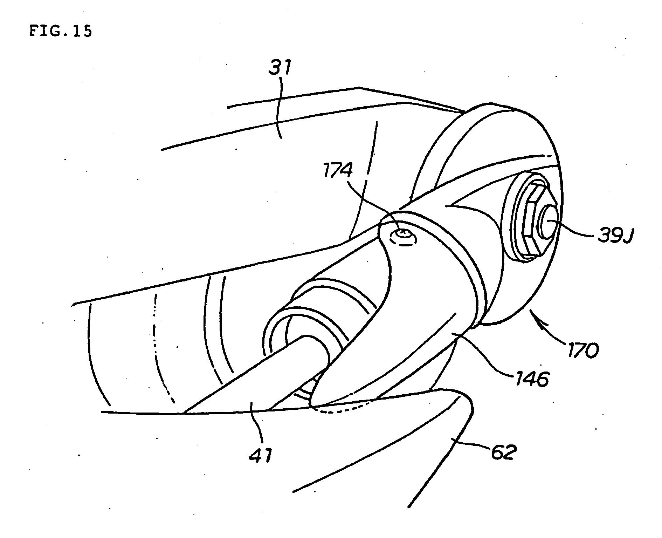

FIG. 15 is a perspective view of the drive shaft cover of the motorcycle according to the present invention. The half-cylindrical cover 146 is attached to the drive shaft 41 from the outside (from the right side to the left side in FIG. 15). Since the half-cylindrical cover 146 is used, the cover can be easily detached to the outside by loosening the fastening member 174.

Assuming that a complete-cylindrical cover is used, it is inevitable that the drive shaft 41 is attached or detached for attaching or detaching the cover. Accordingly, operation time is prolonged.
Meanwhile, in this embodiment, the half-cylindrical cover 146 can be attached or detached while leaving the drive shaft 41 attached. Thus, an operation of attaching or detaching the cover 146 can be finished within a short period of time.

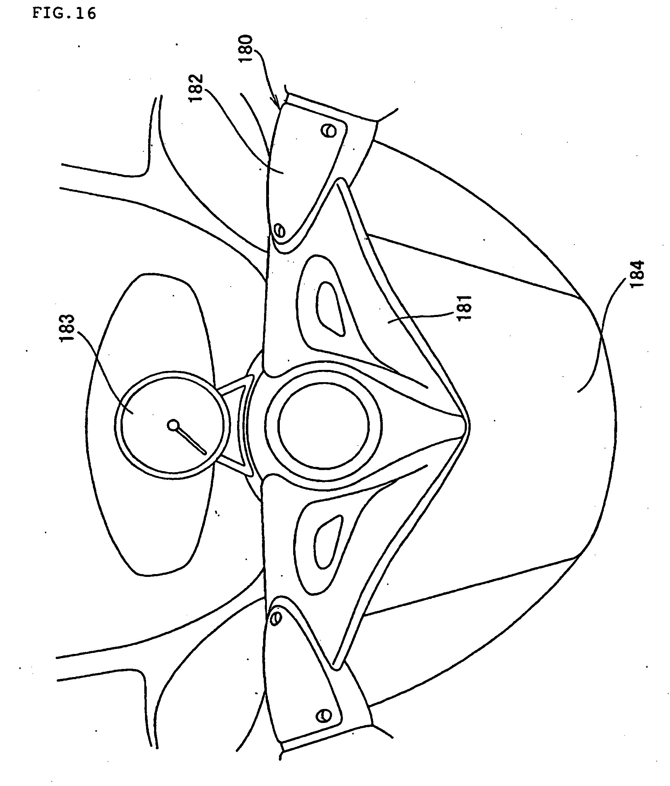

FIG. 16 is a view for explaining a structure around the steering handle of the motorcycle according to the present invention. The steering handle (reference numeral 37 in FIG. 1) is covered with a handle cover 181, and a master cylinder 180 for a hydraulic brake and a brake reserve tank 182 are integrated with the handle cover 181.
By integrating the master cylinder 180 and the brake reserve tank 182 with the handle cover 181, appearance of the structure around the handle can be enhanced.
Incidentally, reference numeral 183 denotes a speedometer, and reference numeral 184 denotes an airbag unit.

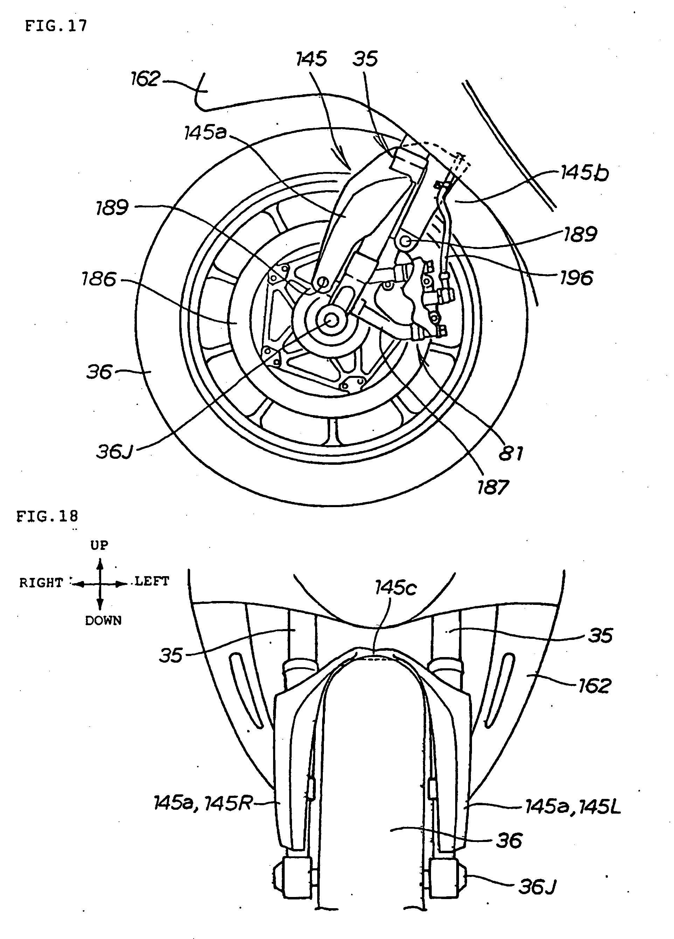

FIG. 17 is a side view for explaining the chipping guard of the motorcycle according to the present invention. FIG. 17 shows an example where the chipping guard 145 is attached to the inverted front fork 35.
To be more specific, the chipping guard 145 is a member for protecting the sliding part of the front fork 35, and includes a front part 145a and a rear part 145b. By use of fastening members 189 and 189, the chipping guard 145 is fixed to a bracket 187 provided on an axle 36J of the front wheel 36.
Reference numeral 186 denotes a front wheel disk plate.

FIG. 18 is a view for explaining the chipping guard of the motorcycle according to the present invention. FIG. 18 illustrates the chipping guard viewed from obliquely above in front of the motorcycle.
Left and right chipping guards 145L and 145R, which form the front parts 145a and 145a of the chipping guard, are connected and integrated with each other above the front wheel 36.

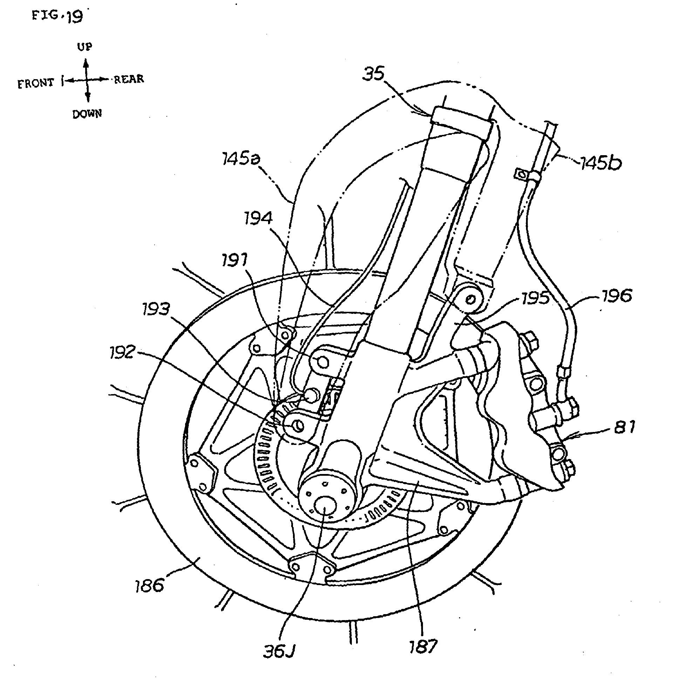

FIG. 19 is a view for explaining arrangement of components around the axle of the front wheel of the motorcycle according to the present invention. FIG. 19 shows the following arrangement example. Specifically, the bracket 187 is disposed around the axle 36J of the front wheel 36, and two upper and lower stay parts 191 and 192 are extended forward from the bracket 187. A wheel speed sensor 193 for an ABS (Antilock Braking System) is disposed between the stay parts 191 and 192, and is fixed with the fastening member (reference numeral 189 in FIG. 17).

The motorcycle of the present invention has a structure in which the lower stay part 192 is fastened together with the front chipping guard 145a. The above structure is advantageous because a cable 194 of the wheel speed sensor 193 is covered with, and protected by, the front chipping guard 145a.

A stay part 195 is extended upward from a rear part of the bracket 187, and the rear chipping guard 145b is attached to the stay part 195. Reference numeral 196 denotes a brake pipe, and the left and right brake pipes 196 are fixed with clamps along the rear chipping guard 145b. Each of upper ends of the brake pipes 196 are combined into one at a connection part 145c of the rear chipping guard 145b, and are connected to the brake master cylinder (reference numeral 180 in FIG. 16).

Based on the configuration described above, operations of the present invention will be described.
Referring back to FIG. 8, when the housing part 155 is closed with the rider seat 83, the grab rails 157 and 157 are disposed below the seat cowl 140 by covering the upper sides of the grab rails 157 and 157 with the seat cowl 140. By disposing the grab rails 157 and 157 below the seat cowl 140 which covers the lower side of the rider seat 83, the grab rails 157 and 157 are not extended above the rider seat 83. Since the grab rails 157 and 157 are not extended above the rider seat 83, a rider P can get on and off the vehicle more easily.

Moreover, by providing the grab rails 157 and 157 below the seat cowl 140, the grab rails 157 and 157 are not exposed to the outside, and can be made inconspicuous when viewed from obliquely above. Since the grab rails 157 and 157 are made inconspicuous, the appearance of the vehicle 12 can be enhanced.
Furthermore, the grab rails 157 and 157 are covered with the upper seat cowl 141 which is a part of the seat cowl 140. Thus, particularly, when driving at a high speed, a rectification effect around the grab rails 157 and 157 is improved. Consequently, aerodynamic performance of the vehicle 12 can be enhanced.

Referring back to FIG. 6, the step parts 128a and 128b included in the gearshift pedal 121 are caused to protrude outside the cover member 61 or above the step floor 25, and the portion other than the step parts 128a and 128b is provided inside the cover member 61 or below the step floor 25. Hence, only the step parts 128a and 128b are present on the upper surface of the step floor 25 which is the footrest space. Since only the step parts 128a and 128b are present on the upper surface of the step floor 25, it is made possible to reduce the dead space on the upper surface of the step floor 25 due to arrangement of the gearshift pedal 121.

In addition, the portion other than the step parts 128a and 128b is provided inside the cover member 61 or below the step floor 25. Thus, even in a vehicle in which a sufficient space cannot be secured on the step floor 25 due to a limitation on the width direction of the vehicle 12 and the like, the footrest space in the width direction of the vehicle on the step floor 25 can be sufficiently secured.

The present invention is suitable for a motorcycle.
- 10: MOTORCYCLE
- 11: VEHICLE BODY FRAME
- 83: RIDER SEAT
- 140: SEAT COWL
- 141: UPPER SEAT COWL
- 142: LOWER SEAT COWL
- 155: HOUSING PART
- 157: GRAB RAIL
- 159: SPACE
- 165: DRIVER SEAT
- 166: PASSENGER SEAT
- 171: TAIL LAMP
- 172: OPENING AND CLOSING SWITCH

## Claims

1. A motorcycle (10) comprising:
a housing part (155), provided in a rear portion of a vehicle body frame (11), for housing articles;
a rider seat (83) which covers the housing part (155) in a way that the rider seat (83) can be opened and closed;
a seat cowl (140) which covers a portion beneath the rider seat (83); and
grab rails (157) provided in the rear portion of the vehicle body frame (11) on which a rider holds,
wherein, the seat cowl (140) is formed of upper and lower seat cowls (141, 142);
when the housing part (155) is closed with the rider seat (83), spaces (159) are provided between the upper and lower seat cowls (141, 142);
the grab rails (157) are disposed along the lower surface of the upper seat cowl (141) in the spaces (159);
**characterized in that**
the upper surface shape of the grab rails (157) is the same as the lower surface shape of the upper seat cowl (141).

2. The motorcycle (10) according to claim 1, wherein a tail lamp (151) provided in the rear portion of the vehicle body frame (11) is disposed in the back part of the spaces (159).

3. The motorcycle (10) according to any one of claims 1 or 2, wherein the rider seat (83) is formed of two divided parts which are a driver seat (165) and a passenger seat (166), and the passenger seat (166) is formed in a away that the passenger seat (166) can be opened and closed independently of the driver seat (165).

4. The motorcycle (10) according to any one of claims 1 to 3, wherein an opening and closing switch (172) for opening and closing the rider seat (83) is provided in a rear end of the seat cowl (140).

## Patentansprüche

1. Motorrad (10), umfassend:
einen Gehäuseteil (155), der in einem hinteren Teil eines Fahrzeugkörperrahmens (11) zur Aufnahme von Gegenständen bereitgestellt ist;
ein Fahrersitz (83), der den Gehäuseteil (155) in einer Weise bedeckt, dass der Fahrersitz (83) geöffnet und geschlossen werden kann;
eine Sitzverkleidung (140), die einen Teil unterhalb des Fahrersitzes (83) bedeckt; und
Griffschienen (157), die im hinteren Teil des Fahrzeugkörperrahmens (11) bereitgestellt sind, an denen sich ein Fahrer festhält,
worin die Sitzverkleidung (140) aus oberen und unteren Sitzverkleidungen (141, 142) gebildet ist;
wenn der Gehäuseteil (155) mit dem Fahrersitz (83) geschlossen ist, Zwischenräume (159) zwischen den oberen und unteren Sitzverkleidungen (141, 142) bereitgestellt sind;
die Griffschienen (157) entlang der Unterseite der oberen Sitzverkleidung (141) in den Zwischenräumen (159) angeordnet sind;
**dadurch gekennzeichnet, dass**
die Form der Oberseite der Griffschienen (157) dieselbe ist wie die Form der Unterseite der oberen Sitzverkleidung (141).

2. Motorrad (10) nach Anspruch 1, worin eine Schlussleuchte (151), die an dem hinteren Teil des Fahrzeugkörperrahmens (11) bereitgestellt ist, an dem Heckteil der Zwischenräume (159) angeordnet ist.

3. Motorrad (10) nach einem der Ansprüche 1 oder 2, worin der Fahrersitz (83) aus zwei geteilten Bestandteilen gebildet ist, die ein Fahrersitzplatz (165) und ein Beifahrersitzplatz (166) sind, und der Beifahrersitzplatz (166) in einer Weise gestaltet ist, dass der Beifahrersitzplatz (166) unabhängig vom Fahrersitzplatz (165) geöffnet und geschlossen werden kann.

4. Motorrad (10) nach einem der vorhergehenden Ansprüche 1 bis 3, worin ein Öffnungs- und Schließschalter (172) zum Öffnen und Schließen des Fahrersitzes (83) an einem hinteren Ende der Sitzverkleidung (140) bereitgestellt ist.

## Revendications

1. Motocycle (10) comprenant :
une partie de logement (155), prévue dans une partie arrière d'un cadre de véhicule (11), pour loger des articles ;
une selle de pilote (83) qui recouvre la partie de logement (155) de manière à ce que la selle de pilote (83) puisse être ouverte et fermée ;
un capot de selle (140) qui recouvre une partie au-dessous de la selle de pilote (83) ; et
des rampes (157) prévues dans la partie arrière du cadre de véhicule (11) sur laquelle un pilote se tient;
dans lequel, le capot de selle (140) est constitué de capots de selle supérieur et inférieur (141, 142) ;
lorsque la partie de logement (155) est fermée par la selle de pilote (83), des espaces (159) sont prévus entre les capots de selle supérieur et inférieur (141, 142) ;
les rampes (157) sont disposées le long de la surface inférieure du capot de selle supérieur (141) dans les espaces (159) ;
**caractérisé en ce que**
la forme de la surface supérieure des rampes (157) est identique à la forme de la surface inférieure du capot de selle supérieur (141).

2. Motocycle (10) selon la revendication 1, dans lequel un feu arrière (151) prévu dans la partie arrière du cadre de véhicule (11) est disposé dans la partie arrière des espaces (159).

3. Motocycle (10) selon l'une quelconque des revendications 1 ou 2, dans lequel la selle de pilote (83) est constituée de deux parties divisées qui sont une selle de pilote (165) et une selle de passager (166), et la selle de passager (166) est formée de manière à ce que la selle de passager (166) puisse être ouverte et fermée de manière indépendante de la selle de pilote (165).

4. Motocycle (10) selon l'une quelconque des revendications 1 à 3, dans lequel le commutateur d'ouverture et de fermeture (172) pour ouvrir et fermer la selle de pilote (83) est prévu dans une extrémité arrière du capot de selle (140).
